# EUROPÄISCHE PATENTSCHRIFT

(11) **EP 2 858 827 B1**
(45) Veröffentlichungstag und Bekanntmachung des Hinweises auf die Patenterteilung: **30.08.2017**
(21) Anmeldenummer: 13727218.3
(22) Anmeldetag: 07.06.2013
(51) Int. Cl.: B42D 25/346, B42D 25/378

(54) **SYSTEM UND VERFAHREN ZUM INDIVIDUALISIEREN VON SICHERHEITSDOKUMENTEN**
SYSTEM AND METHOD FOR INDIVIDUALIZING SECURITY DOCUMENTS
SYSTÈME ET PROCÉDÉ D'INDIVIDUALISATION DE DOCUMENTS DE SÉCURITÉ

(30) Priorität: 08.06.2012 DE 102012209665
(43) Veröffentlichungstag der Anmeldung: 15.04.2015
(73) Patentinhaber: Bundesdruckerei GmbH, 10969 Berlin (DE)
(72) Erfinder: PEINZE, Franziska, 12587 Berlin (DE); KULIKOVSKA, Olga, 14165 Berlin (DE)
(74) Vertreter: Patentanwälte Bressel und Partner mbB
(86) Internationale Anmeldenummer: PCT/EP2013/061810
(87) Internationale Veröffentlichungsnummer: WO 2013/182682

(56) Entgegenhaltungen:
- WO-A1-2011/015798
- DE-A1-102010 025 044

## Beschreibung

Die Erfindung betrifft ein Verfahren zum Individualisieren eines Sicherheitsdokuments sowie ein System zum Individualisieren von Dokumenten. Insbesondere betrifft die Erfindung ein Verfahren zum Individualisieren von Sicherheitsdokumenten, wobei eine farbige, besonders bevorzugt vollfarbige Individualisierungsinformation in ein Sicherheitsdokument eingebracht wird.

Aus dem Stand der Technik ist es bekannt, Sicherheitsdokumente mit Informationen zu versehen, welche individuell dem jeweiligen Sicherheitsdokument zugeordnet sind. Eine solche individuelle Information, welche auch als Individualisierungsinformation bezeichnet wird, ist beispielsweise eine Seriennummer eines Dokuments. Bei einer Vielzahl von Sicherheitsdokumenten ist es darüber hinaus üblich, Informationen einer Person in dem Sicherheitsdokument als Individualisierungsinformationen zu speichern, der das Sicherheitsdokument zugeordnet ist. Bei einem Passdokument umfassen die Individualisierungsinformationen beispielsweise einen Namen, einen Vornamen, ein Geburtsdatum, einen Wohnort, Angaben über biometrische Merkmale wie eine Körpergröße, eine Augenfarbe oder auch ein Fingerabdruckmuster oder ein Gesichtsbild, um einige Personalisierungsmerkmale aufzuführen.

Als Sicherheitsdokumente werden Dokumente angesehen, die mindestens ein Merkmal aufweisen, welches ein Nachahmen, Duplizieren und/oder Verfälschen oder Ähnliches deutlich erschwert oder unmöglich macht. Sicherheitsdokumente umfassen beispielsweise Reisepässe, Personalausweise, Identitätskarten, Zugangskarten, Führerscheine, Visa, Kreditkarten, Postwertzeichen, Wertpapiere, aber auch mit Sicherheitsmerkmalen versehene Eintrittskarten, Echtheitssiegel oder gegen Fälschungen geschützte Verpackungen, um einige beispielhaft aufzuzählen. Gemeinsam ist allen, dass diese mindestens ein, in der Regel mehrere Sicherheitsmerkmale oder Sicherheitselemente umfassen, die eine Verfälschung, Nachahmung, Duplizierung und/oder unautorisierte Herstellung erschweren oder unmöglich machen.

Aus der DE 10 2008 053 582 B3 ist ein tragbarer Datenträger, beispielsweise eine Chipkarte bekannt, in der ein Sicherheitsmerkmal durch Einbringen von Aussparungen, Befüllen der Aussparungen mit einem transluzenten Material und Aushärten des transluzenten Materials erzeugt wird, wobei das transluzente Material Bestandteile enthält, die durch UV und oder IR-Bestrahlung zur Lumineszenz anregbar sind.

Die DE 10 2010 023 218 A1 beschreibt ein Verfahren zur Herstellung eines Sicherheitsdokuments mit einem Wasserzeichen. In mindestens eine opake Folie, gegebenenfalls mehrere übereinander gestapelte opake Folien, werden mehrere Ausnehmungen eingebracht, die die mindestens eine Folie bzw. die gestapelten Folien nicht vollständig durchdringen. Die Ausnehmungen führen zu einer Herabsetzung der Opazität. Weisen die Ausnehmungen unterschiedliche Tiefen auf, so können unterschiedliche Opazitäten im Bereich der unterschiedlich tiefen Ausnehmungen erreicht werden.

Aus der DE 10 2010 025 044 A1 sind ein Verfahren sowie eine Vorrichtung zum Herstellen eines Sicherheitsdokuments sowie ein Sicherheitsdokument bekannt. In ein Substrat eines Sicherheitsdokuments werden an der Oberfläche Löcher eingebracht und in diese eine Tinte appliziert. Diese ist vorzugsweise so ausgebildet, dass diese Farbmittel umfasst, die in das Substrat diffundieren. Die drucktechnisch aufgebrachte Tinte wird tiefer in das Dokument eingebracht als eine lediglich auf die Oberfläche aufgedruckte Tinte und ist so besser gegen eine Verfälschung und/oder Beschädigung während der Nutzung geschützt.

Aus der WO 2011/015798 A1 ist ein Verfahren gemäß dem Oberbegriff des Anspruchs 1 zum Herstellen eines Sicherheitselements für ein Sicherheitsdokument bekannt, welches die Schritte umfasst:
Bereitstellen eines ersten Abschnitt des Sicherheitsdokuments, wobei der erste Abschnitt des Sicherheitsdokuments mindestens eine Öffnung, durch diesen Teil hindurch aufweist, wobei die oder jede Öffnung durch eine Innenfläche des ersten Abschnitts des Dokuments begrenzt ist; Drucken durch den ersten Abschnitt des Sicherheitsdokuments, sodass die Tinte auf zumindest einen Teil der Innenfläche der mindestens einen Öffnung aufgetragen wird. Ebenfalls bereitgestellt wird ein Verfahren zum Herstellen eines Sicherheitselements für ein Sicherheitsdokument, umfassend: Bereitstellen eines ersten Anschnitt des Sicherheitsdokuments, wobei der erste Abschnitt des Sicherheitsdokuments mindestens einer Öffnung aufweist, wobei die mindestens eine Öffnung durch eine Innenfläche des ersten Abschnitt des Dokuments begrenzt ist; und Drucken durch den ersten Bereich des Sicherheitsdokuments auf einem zweiten Abschnitt des Sicherheitsdokuments hinter dem ersten Abschnitt des Sicherheitsdokuments, sodass die Tinte auf zumindest einen mit der mindestens einen Öffnung ausgerichteten Bereich des zweiten Abschnitts des Sicherheitsdokuments aufgebracht wird.

Um besonders fälschungssichere Sicherheitsdokumente zu erhalten, umfassen diese heutzutage in der Mehrzahl einen aus mehreren Kunststoffschichten hergestellten Laminationskörper. In einen solchen Laminationskörper können eine Vielzahl unterschiedlicher Sicherheitsmerkmale oder Sicherheitselemente integriert werden. Üblich ist es beispielsweise die einzelnen Kunststoffschichten vor dem Zusammenfügen mittels eines Laminationsverfahrens teil- oder vollflächig zu bedrucken und hierüber die Individualisierungsinformation in das Sicherheitsdokument zu speichern.

Insbesondere bei Ausführungsformen, bei denen die einzelnen zusammengefügten Kunststoffschichten aus demselben thermoplastischen Kunststoffmaterial hergestellt sind, lassen sich auf diese Weise nahezu monolithische Laminationskörper schaffen, die eine Manipulation der gespeicherten Individualisierungsinformationen stark erschweren. Eine Voraussetzung hierfür ist jedoch, dass die Individualisierungsinformationen auf eine innere oder in eine innere Schicht gespeichert werden und anschließend eine sehr gute Verbindung zwischen den einzelnen Kunststoffschichten ausgebildet wird. Dies ist in der Regel nur in großen Produktionsanlagen möglich, so dass eine Herstellung solcher Sicherheitsdokumente zentralisiert in einer oder wenigen Fertigungsstätten zu erfolgen hat.

Aus dem Stand der Technik sind jedoch auch Vorrichtungen bekannt, mit denen ein Einspeichern von Individualisierungsinformationen dezentral erfolgen kann. Hierbei werden die Individualisierungsinformationen in der Regel auf eine äußere Oberfläche eines Dokumentenrohlings aufgedruckt. Das Aufdrucken erfolgt in der Regel mittels Thermotransferdruck oder Inkjetdruck und kann farbig vorgenommen werden. Ebenso ist es bekannt, hierfür UV-härtende Druckzubereitungen zu verwenden. Um eine Manipulation der aufgedruckten Individualisierungsinformation zu erschweren, wird die aufgedruckte Information durch eine weitere Folie oder eine Lackschicht abgedeckt. Eine solche weitere Folie wird beispielsweise auf den Dokumentrohling auflaminiert. In einer dezentralen Einrichtung lassen sich jedoch nicht die Temperaturen und Drücke erreichen, die notwendig wären, um eine solche Folie mit dem restlichen Dokumentenrohling zu einem monolithischen Körper zu verbinden. Zusätzlich ist es bekannt, teil- oder ganzflächig Hologramme über die Individualisierungsinformationen anzubringen.

Nachteilig an den bekannten Verfahren ist es jedoch, dass die Schutzschichten sich häufig zerstörungsfrei entfernen lassen, so dass anschließend die aufgedruckte Individualisierungsinformation verfälscht oder sogar vollständig entfernt und ersetzt werden kann. Anschließend kann in vielen Fällen die Schutzschicht entweder durch eine identische neue Schutzschicht ersetzt oder die zuvor abgenommene Schutzschicht erneut appliziert werden. Dezentral individualisierte Sicherheitsdokumente weisen somit in der Regel eine sehr viel geringere Sicherheit insbesondere gegenüber nachträglichen Verfälschungen auf.

Der Erfindung liegt somit die Aufgabe zugrunde, ein verbessertes Verfahren zum Individualisieren von Sicherheitsdokumenten, insbesondere zum dezentralen Individualisieren von Sicherheitsdokumenten zu schaffen, mit dem vorzugsweise farbige, besonders bevorzugt vollfarbige Individualisierungsinformationen in das Sicherheitsdokument eingespeichert werden können, welches eine nahezu gleichwertige Sicherheit gegenüber Verfälschungen wie ein in einer zentralen Individualisierungsvorrichtung hergestelltes Sicherheitsdokument aufweist. Ferner liegt der Erfindung die Aufgabe zugrunde, ein System anzugeben, mit dem eine solche dezentrale Individualisierung möglich ist.

Der Erfindung liegt die Idee zugrunde, Sicherheitsdokumentrohlinge in der Weise bereitzustellen, dass diese einen Laminationskörper umfassen, in den bereits eine Vielzahl von Sicherheitsmerkmalen integriert sind. Der Laminationskörper wird so ausgebildet und bereitgestellt, dass dieser an einer Außenfläche zumindest in einem für die Individualisierung vorgesehenen Individualisierungsbereich Perforationsöffnungen in einer an die Außenfläche angrenzenden Materialschicht aufweist, die diese Materialschicht bis zu einer Informationsschicht im Inneren des Laminationskörpers durchdringen. Die Informationsschicht weist zumindest in dem Individualisierungsbereich eine grafisch wahrnehmbare Information auf. Die Individualisierungsinformation wird nun auf die Außenfläche in der Weise aufgebracht, dass zumindest ein Teil der Individualisierungsinformation durch die Perforationsöffnungen hindurch auf die im Inneren liegende Informationsschicht aufgedruckt wird. Eine Manipulation der so aufgebrachten Individualisierungsinformation ist kaum möglich. Da die an die Außenfläche angrenzende äußere Materialschicht des bereitgestellten Laminationskörpers mit der darunterliegenden Informationsschicht in einem zentral durchgeführten Laminationsverfahren verbunden ist, können die Informationsschicht und die darüberliegende mit den Perforationsöffnungen versehene äußere Materialschicht gemeinsam zu einem monolithischen Laminationskörper verbunden sein, so dass ein Auftrennen des Laminationskörpers an der im Produktionsprozess ursprünglich vorhandenen Schichtengrenze zwischen der Informationsschicht und der äußeren Substratschicht unmöglich ist. Durch das Aufdrucken zumindest eines Teils der Individualisierungsinformation auf die Informationsschicht wird diese modifiziert. Dieses erschwert eine Manipulation des individualisierten Sicherheitsdokumenten Rohlings oder fertigen Sicherheitsdokuments, da ein Abspalten oder vollständiges oder teilweises Abtragen der mit den Perforationsöffnungen versehenen Materialschicht und ein anschließendes Ersetzen durch eine neue Materialschicht nicht unbemerkt möglich ist. Zum einen ist die Informationsschicht durch die Individualisierungsinformationen verändert. Zum andern ist eine Ausrichtung der Perforationen der neuen Materialschicht zu der Informationsschicht in der Weise schwierig oder unmöglich, dass die neuen Perforationen alle an denselben Stellen angeordnet sind, wie die ursprünglichen Perforationen. Ist die Ausrichtung und Anordnung nicht perfekt, so sind in der Regel Bestandteile der ursprünglichen Individualisierungsinformation an Stellen vorhanden, an denen keine "neuen" Perforationen ausgebildet sind. Ferner können die alten Individualisierungsinformationen in der Regel nicht vollständig durch Bestandteile der gefälschten und somit "neuen" Individualisierungsinformationen überdruckt oder in diese im Sinne einer sinnvollen Ergänzung integriert werden.

### Definitionen

Ein Sicherheitsmerkmal ist ein Merkmal, welches eine Verfälschung, Nachahmung oder unautorisierte Herstellung eines Gegenstands erschwert oder unmöglich macht.

Ein Sicherheitselement ist eine Entität, die mindestens ein Sicherheitsmerkmal aufweist. Im Sinne dieser Definition stellt auch jedes Sicherheitsdokument ein Sicherheitselement dar.

Als monolithischer Laminationskörper wird ein aus mehreren unterschiedlichen Schichten hergestellter Körper angesehen, bei dem die einzelnen Substratschichten so miteinander verbunden werden, dass aufgrund der chemischen Struktur die vor der Lamination vorhandenen Schichtgrenzen in dem fertigen Laminationskörper nicht mehr als Phasenübergänge nachweisbar sind. Es versteht sich für den Fachmann, dass sich die ursprünglich vorhandenen unterschiedlichen Substratschichten im fertigen Laminationskörper beispielsweise anhand der unterschiedlichen Beimengungen von Zusatzstoffen ermitteln lassen, die die zur Erstellung des Laminationskörpers verwendeten Substratschichten vor der Lamination enthielten. Ein Laminationskörper, der aus einer mittels Farbpigmenten im Volumen durchgefärbten Kunststoffschicht und einer transparenten farbneutralen Kunststoffschicht zu einem monolithischen Laminationskörper zusammengefügt wird, weist im fertigen Laminationskörper unterschiedliche Materialschichten auf, die unterschiedliche Eigenschaften in Bezug auf eine Wechselwirkung auf Licht zeigen. Hinsichtlich der chemischen Polymerstruktur ist jedoch ein Phasenübergang bei einem monolithischen Laminationskörper nicht feststellbar.

Als farbig wird eine Substanz oder Zubereitung angesehen, die bei einem menschlichen Betrachter einen Farbeindruck hervorruft. Schwarz- und Graustufentöne werden in diesem Zusammenhang nicht als farbig angesehen. Als bunt wird ein Gegenstand angesehen, wenn dieser zwei unterschiedliche Farbeindrücke bei einem menschlichen Betrachter hervorruft. Als vollfarbig wird ein Gegenstand bezeichnet, der eine Vielzahl von Farbeindrücken aus einem aufgespannten Gamut umfasst, der von drei Primärfarben aufgespannt wird. Als vollfarbig werden beispielsweise Drucke angesehen, die mit einem Mehrfarbdrucksystem hergestellt sind, welches als primäre Farben beispielsweise die Farben Cyan, Gelb und Magenta umfasst. Voraussetzung ist selbstverständlich, dass die zu druckende Information selbst farbig ausgestaltet ist.

Als Individualisierungsinformation wird jede Information bezeichnet, die einem herzustellenden Sicherheitsdokument individuell zugeordnet ist. Dies bedeutet, dass sich diese Information für unterschiedlich hergestellte Sicherheitsdokumente unterscheidet. Als Personalisierungsinformation wird eine solche Individualisierungsinformation bezeichnet, die einer Person zugeordnet ist, der das hergestellte oder herzustellende Sicherheitsdokument zugeordnet ist oder wird.

Als digitale Druckeinrichtung wird eine Druckeinrichtung betrachtet, die für ein Drucken von Informationen in der Weise vorgesehen ist, dass auf nacheinander gefertigte Druckstücke jeweils unterschiedliche Informationen druckbar sind, ohne dass hierdurch ein Durchsatz der Druckeinrichtung deutlich verringert wird oder gar Einrüstzeiten von Nöten wären. Tintenstrahldrucker oder auch Plotter stellen digitale Druckeinrichtungen dar. Das Druckbild kann jeweils anhand einer digitalen Datei festgelegt werden. Weitere digitale Druckeinrichtungen drucken beispielsweise nach einem Transferdruckverfahren.

Als Informationsschicht ist eine Schicht, welche eine grafisch wahrnehmbare Information an, in oder auf einer Oberfläche aufweist. Eine Informationsschicht kann eine Druckschicht auf einer Substratschicht, insbesondere einer Kunststofffolie sein. Ebenso kann eine Informationsschicht auch in einem Körper, beispielsweise einer Folie ausgebildet sein, welcher im Volumen in der weise strukturiert ist, dass an der Oberfläche, welche die Informationsschicht bildet, eine grafisch wahrnehmbare Information gespeichert ist. Beispielsweise kann eine Folie mittels Extrusion aus unterschiedlich farbigen Kunststoffmaterialien hergestellt werden, so dass an der Oberfläche der Folie ein farbiges Muster grafisch wahrnehmbar ist. Grafisch wahrnehmbar bedeutet in diesem Zusammenhang, dass das Muster durch einen menschlichen Betrachter visuell wahrnehmbar ist oder mittels eines fotografischen Prozesses erfassbar und speicherbar ist. Hierfür kann es notwendig sein, geeignete Belichtungsbedingungen und/oder Betrachtungs-/Erfassungsbedingungen zu nutzen. So kann die Informationsschicht auch beugende Strukturen, wie ein Kinegramm oder ein Hologramm oder ähnliches umfassen.

### Bevorzugte Ausführungsformen

Insbesondere wird ein Verfahren zum Individualisieren eines Sicherheitsdokuments vorgeschlagen, welches die Schritte umfasst: Bereitstellen eines Dokumentenrohlings, wobei der Dokumentenrohling einen Laminationskörper umfasst; Bereitstellen einer digitalen Druckeinrichtung; Bedrucken mindestens einer Außenfläche des Laminationskörpers mittels der digitalen Druckeinrichtung zum Einbringen von Individualisierungsinformationen in den Laminationskörper; wobei der Dokumentenrohling mit einem Laminationskörper bereitgestellt wird, der zumindest in einem Individualisierungsbereich in einer an die mindestens eine Außenfläche angrenzenden äußeren Materialschicht eine Vielzahl die äußere Materialschicht bis zu einer Informationsschicht durchdringende Perforationsöffnungen aufweist, und die Individualisierungsinformationen so auf die Außenfläche aufgedruckt werden, dass zumindest ein Teil der Individualisierungsinformationen durch die Perforationsöffnungen hindurch auf die Informationsschicht gedruckt wird.

Die Perforationsöffnungen weisen bevorzugt Durchmesser im Mikrometerbereich auf. Besonders bevorzugt werden Perforationsöffnungen mit einem Durchmesser im Bereich von 20 µm bis 200 µm. Bevorzugter liegen die Durchmesser im Bereich von 30 µm bis 70 µm und am bevorzugtesten im Bereich von 50 µm +/- 10 µm. Diese Werte beziehen sich auf die Öffnungsgrößen vor der Lamination. Nach der Lamination können diese geringer sein. Bei einer solchen Wahl entsprechen die Durchmesser der einzelnen Mikroperforationsöffnungen in etwa der Größe einzelner Bildpixel, wenn das Drucken der Individualisierungsinformationen mit einer Druckauflösung von etwa 600 dpi vorgenommen wird. Bei einer bevorzugten Ausführungsform sind somit die Durchmesser der Perforationsöffnungen an der Außenfläche so gewählt, dass diese in der Größenordnung eines Durchmessers eines Pixels liegen.

Eine Tiefe der Perforationsöffnungen bzw. eine Schichtstärke der äußeren Materialschicht zwischen der Informationsschicht und der Außenfläche des Laminationskörpers liegt vorzugsweise im Bereich zwischen 30 µm und 200 µm.

Als besonders geeignet haben sich Laminationskörper erwiesen, bei denen die Perforationsöffnungen in dem Individualisierungsbereich in einem regelmäßigen Raster angeordnet sind. Hierdurch wird die Möglichkeit geschaffen, eine nahezu beliebige Information in dem herzustellenden Sicherheitsdokument allein durch den Anteil der Individualisierungsinformationen zu speichern, der auf die Informationsschicht gedruckt wird. Ebenso kann nahezu jede beliebige Individualisierungsinformation so aufgedruckt werden, dass ein Anteil auf der Außenfläche gespeichert ist und ein anderer Anteil auf der Informationsschicht. Voraussetzung ist jedoch, dass die Perforationsöffnungen ein Raster bilden, in dem die Abstände der Perforationsöffnungen klein gegen die Ausdehnung der gedruckten Informationsstrukturen sind.

Vorzugsweise ist ein Raster so ausgebildet, dass die Mittelpunkte der Perforationsöffnungen an der Außenfläche einen Abstand zueinander aufweisen, der im Bereich von dem 1,2-fachen bis zu dem 3-fachen des Durchmessers der Perforationsöffnung an der Außenfläche, bevorzugt in dem Bereich von dem 1,3-fachen bis zum 1,4-fachen des Durchmessers beträgt und am bevorzugtesten dem 1,4-fachen des Durchmessers beträgt.

Bei einer solchen Ausführungsform nehmen die Perforationsöffnungen etwas 40 % der Außenfläche in dem Bereich des regelmäßigen Rasters ein. Ein solcher Flächenanteil der Öffnungen lässt sich realisieren, ohne eine Stabilität des Laminationskörpers in dem Individualisierungsbereich zu beeinträchtigen.

Bei einer Ausführungsform ist vorgesehen, dass zumindest der Anteil, der auf die Informationsschicht durch die Perforationsöffnungen hindurch gedruckt wird, pixelgenau mittels einer Zubereitung in die Perforationsöffnungen gedruckt wird. Bei einer solchen Ausführungsform kann die gesamte Individualisierungsinformation pixelgenau auf die Informationsschicht gedruckt werden. In einem solchen Fall ist die äußere Materialschicht vorzugsweise transparent und farbneutral ausgebildet.

Ebenso ist es bei anderen Ausführungsformen möglich, dass die Individualisierungsinformation vollflächig auf den Individualisierungsbereich aufgebracht wird, so dass ein Teil der Individualisierungsinformationen auf die Außenfläche aufgedruckt wird und ein Teil der Individualisierungsinformationen durch die Perforationsöffnungen hindurch auf die Informationsschicht aufgedruckt wird. Die einzelnen Informationsbestandteile, beispielsweise Bestandteile eines Gesichtsbildes, sind dann korreliert zueinander in unterschiedlichen Ebenen des fertigen Sicherheitsdokuments gespeichert. Dies kann zu Verifikationszwecken des Sicherheitsdokuments genutzt werden. Selbst wenn der auf die Außenfläche aufgebrachte Informationsanteil, welcher einer Manipulation leichter zugänglich ist, verfälscht wird, ist dies dadurch feststellbar, dass die Korrelation zwischen dem Anteil, der auf der Außenfläche aufgebracht ist, und dem Anteil der Individualisierungsinformationen, der auf die Informationsschicht durch die Perforationsöffnungen aufgebracht ist, nicht mehr vollständig existiert.

Die Individualisierungsinformation kann auch in der Weise teilflächig auf den Individualisierungsbereich aufgebracht werden, so dass ein Teil der Individualisierungsinformationen auf die Außenfläche aufgedruckt wird und ein Teil der Individualisierungsinformationen durch die Perforationsöffnungen hindurch auf die Informationsschicht aufgedruckt wird, jedoch eine Teil der Außenfläche unbedruckt bleibt. Bei manchen Ausführungsformen bleibt auch die Informationsschicht im Bereich einiger Perforationsöffnungen unbedruckt.

Besonders bevorzugt wird die Individualisierungsinformation mittels eines Tintenstrahldruckverfahrens mittels einer oder mehrerer Zubereitungen aufgedruckt. Tintenstrahldruckeinrichtungen sind in der Lage, gezielt einzelne Pixel in einer vorgewählten Farbe mittels einer Zubereitung zu drucken. Hierüber ist möglich, beispielsweise pixelgenau die Zubereitung in die einzelnen Perforationsöffnungen zu drucken. Darüber hinaus ist es durch die Verwendung von drei Zubereitungen, welche jeweils im verdruckten Zustand den Farbeindruck einer Primärfarbe hervorrufen, möglich, vollfarbige Individualisierungsinformationen aufzudrucken, wobei über eine Farbsubtraktion sämtliche Farbeindrücke in einem durch die Primärfarben aufgespannten Gamut zur Darstellung der Individualisierungsinformationen nutzbar sind.

Besonders bevorzugt werden jedoch Tintenstrahldruckeinrichtungen, in denen zusätzlich zu den Farbzubereitungen, welche einen Farbeindruck einer Primärfarbe vermitteln, weitere Zubereitungen genutzt werden, die beispielsweise einen schwarzen Farbeindruck hervorrufen oder zusätzlich weitere nicht in dem Gamut liegende Farbeindrücke hervorrufen können.

Erfindungsgemäß wird die Individualisierungsinformation mit einem Sicherheitsdruck kombiniert, der bei der Herstellung des Laminationskörpers auf die Informationsschicht aufgebracht ist. Erfindungsgemäß wird somit der Dokumentkörper mit einem Sicherheitsdruck auf der Informationsschicht bereitgestellt. Der Anteil der Individualisierungsinformationen, der durch die Perforationsöffnungen hindurch auf die Informationsschicht aufgedruckt wird, wird somit mit dem Sicherheitsdruck auf der Informationsschicht verbunden. Sollte es einem Fälscher gelingen, Anteile der auf die Informationsschicht aufgedruckten Individualisierungsinformationen zu entfernen, so führt dies ebenfalls zu einer Veränderung und/oder Beschädigung des Sicherheitsdrucks. Um den Sicherheitsdruck im überdruckten Bereich erkennen zu können, werden erfindungsgemäß Zubereitungen verwendet werden, welche im verdruckten Zustand transluzent oder transparent sind, so dass Teile des Sicherheitsdrucks trotz einer Überdruckung durch die Individualisierungsinformationen hindurch nach wie vor wahrnehmbar ist.

Eine besonders gute Verbindung mit dem Sicherheitsdruck stellt sich ein, wenn Zubereitungen verwendet werden, deren Farbmittel zumindest teilweise in das Material eindiffundieren, auf welches diese aufgedruckt werden. Bei einer Ausführungsform werden daher die Individualisierungsinformationen mittels mindestens einer Zubereitung gedruckt, welche ein Lösungsmittel umfasst, welches das Material der äußeren Materialschicht und/oder der Informationsschicht angreift, so dass ein Eindiffundieren der Farbmittel der Zubereitung in die Wände der Perforationsöffnungen in der äußeren Materialschicht und/oder die Informationsschicht begünstigt wird. Eine untrennbare Verbindung zwischen der aufgedruckten Individualisierungsinformation und der jeweiligen die Information aufnehmenden Materialschicht kann auch dadurch oder zusätzlich erreicht werden, dass die Zubereitung auf Basis desselben Kunststoffmaterials hergestellt ist, aus dem die jeweilige Materialschicht oder die Materialschichten hergestellt sind.

Beispielsweise eignen sich bei einer Verwendung von Polycarbonaten für die Informationsschicht und die äußere Materialschicht Zubereitungen, die auf Basis von Polycarbonat hergestellt sind. Solche Zubereitungen sind beispielsweise in der DE 10 2007 052 947 A1 beschrieben.

Die DE 10 2007 052 947 A1 lehrt die Verwendung einer Zubereitung enthaltend: A) 0,1 bis 20 Gew.-% eines Bindemittels mit einem Polycarbonatderivat auf Basis eines geminal disubstituierten Dihydroxydiphenylcycloalkans, B) 30 bis 99,9 Gew.-% eines vorzugsweise organischen Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionales Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt, als Tintenstrahldruckfarbe.

Hinsichtlich der konkreteren Ausgestaltung wird auf die zitierte Offenlegungsschrift verwiesen, die hiermit vollumfänglich als Bestandteil dieser Anmeldung aufgenommen wird.

Um ein Eindringen der Zubereitung in die Perforationsöffnungen und hin zu der Informationsschicht zu begünstigen und die Außenfläche möglichst minimal zu verändern, sind die Perforationsöffnungen bei einer Ausführungsform so ausgebildet, dass diese sich konisch von der Außenfläche des Laminationskörpers zu der Informationsschicht hin aufweiten. Hierdurch lassen sich ebenfalls zusätzliche Effekte erzielen, da es bei senkrechter Betrachtung einen flächigen Überlapp eines die Perforationsöffnung umgebenden Ringsegments an der Außenfläche mit einem Ringsegment auf der Informationsschicht am Rand der Perforationsöffnung gibt, deren Öffnungsdurchmesser auf der Informationsschicht aufgrund der konischen Aufweitung größer ist.

Hierdurch können sich betrachtungswinkelabhängige Effekte bei einer Verkippung des Laminationskörpers ergeben. Ursache ist eine Änderung der Überlappungsbereiche.

Besonders bevorzugt wird die Individualisierungsinformation vollfarbig gedruckt. Besonders bevorzugt umfasst die Individualisierungsinformation ein Gesichtsbild eines Nutzers, dem das Sicherheitsdokument zugeordnet ist oder wird.

Um die auf die Außenfläche aufgedruckte Individualisierungsinformation vor Manipulation und/oder Beschädigung zu schützen, wird bei einer bevorzugten Ausführungsform auf die Außenfläche nach dem Aufdrucken der Individualisierungsinformation, die zumindest teilweise durch die Perforationsöffnungen auf die Informationsschicht im Inneren des Laminationskörpers gedruckt wird, eine Abdeckschicht oder Substratschicht aufgebracht. Diese kann beispielsweise als Lackschicht aufgebracht werden und ausgebildet sein. Vorzugsweise wird hierfür ein transparenter farbneutraler Lack verwendet. Ebenso ist es möglich eine transparente Folie auf den Laminationskörper aufzulaminieren. In der Regel lassen sich jedoch nicht die Drücke oder Temperaturen erreichen, die notwendig wären, um eine monolithische Verbindung der äußeren Schutzschicht mit dem Rest des mittels des Dokumentrohlings bereitgestellten Laminationskörpers zu erreichen. Die perforierte Außenschicht begünstigt zusätzlich die Verbindung der äußeren Schutzschicht mit dem Laminatkörper. Lack bzw. Kleber können in die Öffnungen eindringen. Dadurch vergrößert sich die Verbindungsfläche. Das Durchdringen von Lack bzw. Kleber in die Perforationsöffnungen verhindert das nachträgliche Überdrucken der Individualisierungsinformation auf die Informationsschicht.

Neben den oben beschriebenen Perforationsöffnungen, die sich konisch von der Außenfläche zur Informationsschicht hin aufweiten, sind bei einigen Ausführungsformen auch andere Geometrien für die Perforationsöffnungen vorgesehen. Diese können eine zylindrisch oder konisch verjüngende Form aufweisen. Im Hinblick auf eine Querschnittsform parallel zur Außenfläche können die Perforationsöffnungen kreisrund, oval, dreieckig, quadratisch, vieleckig, z.B. sternförmig, sechseckig usw. ausgebildet sein. Die verschiedenen Querschnittsformen und Geometrien können beliebig miteinander kombiniert werden. In einem Laminationskörper können Perforationsöffnungen unterschiedlicher Gestalt miteinander kombiniert werden. Sich ins Innere aufweitende Perforationsöffnungen werden bevorzugt, da diese besonders schwer nachträglich beim Fälschen eingebracht werden können.

Nach einem Aspekt der Erfindung wird ein bevorzugtes System für eine dezentralisierte Personalisierung oder Individualisierung von Dokumenten vorgeschlagen. Ein solches System zur Individualisierung von Dokumenten umfasst: einen oder mehrere Dokumentenrohlinge mit einem Laminationskörper; sowie eine digitale Druckvorrichtung, wobei der Laminationskörper in einem Individualisierungsbereich in einer an eine Außenfläche angrenzenden äußeren Materialschicht eine Vielzahl von Perforationsöffnungen aufweist, die die an die Außenfläche angrenzende äußere Materialschicht bis zu einer Informationsschicht durchdringen und die Druckvorrichtung so ausgebildet ist, dass diese zumindest einen Teil der Individualisierungsinformation durch die Perforationsöffnungen hindurch auf die Informationsschicht druckt.

Vorzugsweise umfasst das System eine Steuereinrichtung, welche ausgebildet ist, Individualisierungsinformationen, beispielsweise in Form eines elektronischen Datensatzes, zu empfangen und die Druckvorrichtung anzusteuern. Die Druckvorrichtung ist vorzugsweise als Tintenstrahldruckvorrichtung ausgebildet. Besonders bevorzugt ist diese in der Lage, eine Mehrzahl von Zubereitungen, welche jeweils im verdruckten Zustand einen unterschiedlichen Farbeindruck hervorrufen, zu verdrucken. Insgesamt wird so ein System geschaffen, welches Sicherheitsdokumente in geringerer Stückzahl, als dieses in Großanlagen üblich ist, dezentral personalisieren kann. Der technische Aufwand für diese Systeme, insbesondere auch im Hinblick auf die hierfür erforderlichen Kapitalkosten, kann so gering gehalten werden, dass diese dezentralisiert eingesetzt werden können. Dennoch sind die mit den Individualisierungsinformationen versehenen Sicherheitsdokumente hinsichtlich der Fälschungssicherheit ähnlich zu kategorisieren wie in einer zentralisierten Herstellungseinrichtung hergestellte Sicherheitsdokumente. Solche Systeme sind insbesondere für die Personalisierung von Sicherheitsdokumenten geeignet, bei denen Durchsätze von weniger als 200 Dokumente pro Stunde vorgesehen sind. Ein solches System kann zusätzlich eine Laminationseinrichtung oder eine Lackiereinrichtung aufweisen. Eine Lackschicht kann ebenfalls mit einem Tintenstrahldruckverfahren oder einem beliebigen anderen Druckverfahren auf den fertig individualisierten Laminationskörper aufgebracht werden.

Bei den so hergestellten und individualisierten Sicherheitsdokumenten kann es sich einerseits um Sicherheitsdokumente handeln, welche als Kunststoffkarten ausgebildet sind. Ebenso können jedoch auch Sicherheitsdokumente auf diese Weise personalisiert werden, die beispielsweise als Passbuch ausgebildet sind, in welches ein Laminationskörper als eine Seite eingebunden ist.

Nachfolgend wird die Erfindung unter Bezugnahme auf eine Zeichnung näher erläutert. Hierbei zeigen:
- Fig. 1: eine schematische Darstellung mehrerer Substratschichten, die zu einem Laminationskörper eines Dokumentenrohlings zusammengefügt werden;
- Fig. 2a: eine schematische Ansicht eines Laminationskörpers im Querschnitt;
- Fig. 2b: eine schematische Ansicht eines Sicherheitsdokuments, welches sich nach dem Aufbringen einer Schutzschicht auf den Laminationskörper nach Fig. 2a ergibt;
- Fig. 3: eine schematische Draufsicht auf ein mit Individualisierungsinformationen versehenes Sicherheitsdokument;
- Fig. 4: eine schematische Schnittansicht durch eine Substratschicht, welche als oberste Schicht mit anderen Substratschichten zu einem Laminationskörper verarbeitet werden kann;
- Fig. 5a: eine schematische Ansicht im Querschnitt eines Laminationskörpers mit einem Sicherheitsdruck vor einer Individualisierung;
- Fig. 5b: eine schematische Ansicht im Querschnitt des Laminationskörpers nach Fig. 5a nach dem Aufbringen von Individualisierungsinformationen;
- Fig. 5c: eine schematische Ansicht im Querschnitt eines fertigen Sicherheitsdokuments; und
- Fig. 6: eine schematische Ansicht eines Systems zur dezentralen Individualisierung von Sicherheitsdokumenten.

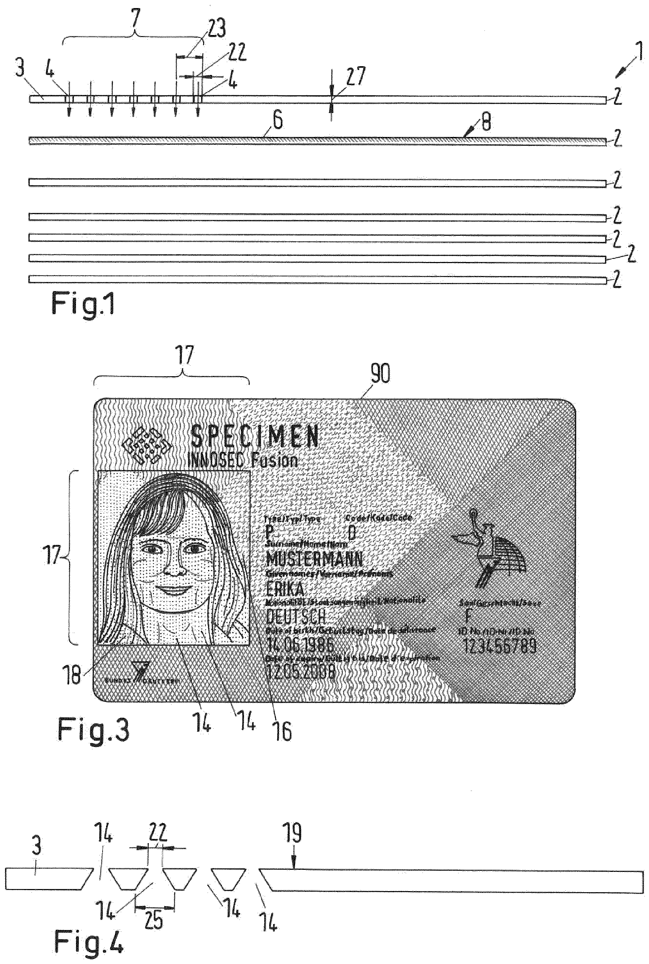

In Fig. 1 ist schematisch ein Stapel 1 von Substratschichten 2 dargestellt. Diese werden in einem Hochdruckhochtemperaturlaminationsverfahren zu einem Laminationskörper zusammengefügt. Die Substratschichten 2 sind vorzugsweise alle aus demselben Kunststoffmaterial hergestellt, beispielsweise einem Polycarbonatmaterial. Alternativ können die Substratschichten auch aus einem anderen Kunststoffmaterial, beispielsweise PVC, ABS, TPU, PET oder Ähnlichem hergestellt sein. Vorzugsweise sind die Substratschichten 2 alle aus demselben Kunststoffmaterial. Andere Ausführungsformen können jedoch vorsehen, dass die einzelnen Substratschichten 2 auch aus unterschiedlichen Kunststoffmaterialien hergestellt sind. Die einzelnen Substratschichten 2 können unterschiedliche Farben und Beimengungen an Zusatzstoffen aufweisen. Ferner können die Oberflächen individuell bedruckt sein. Ferner ist es möglich, zwischen die Substratschichten weitere Sicherheitselemente (nicht dargestellt) einzufügen und/oder Sicherheitsmerkmale einzuprägen.

Eine äußere Substratschicht 3 ist vorzugsweise transparent und farbneutral und weist in einem für eine spätere Individualisierung vorgesehenen Bereich 7 eine Vielzahl von Perforationsöffnungen 4 auf. Diese durchdringen die äußere Substratschicht 3 vollständig und stellen somit Durchgangsöffnungen dar. Die Perforationsöffnungen 4 weisen vorzugsweise Durchmesser 22 in der Größenordnung von 20 µm bis 200 µm auf, besonders bevorzugt im Bereich von 50 µm. Die Perforationsöffnungen 4 sind vorzugsweise in einem regelmäßigen bzw. bestimmten Raster angeordnet. Bei einigen Ausführungsformen sind die Perforationsöffnungen so angeordnet, dass diese gemeinsam über ihre Anordnung ein Muster, z.B. ein Logo, Schriftzeichen oder Ähnliches darstellen. Die Abstände 23 von Mittelpunkten 24 liegen vorzugsweise im Bereich von 50 bis 300 µm, besonders bevorzugt im Bereich von 70 µm, bei einem Durchmesser 22 der Perforationsöffnungen 4 von 50 µm. Die dargestellten Öffnungsgrößen und Abstände sind nicht maßstabsgerecht. Eine Substratschichtstärke 27 der äußeren Substratschicht 3 liegt vorzugsweise im Bereich zwischen 50 µm und 200 µm, vorzugsweise im Bereich von etwa 50 µm bis 100 µm.

An die äußere Substratschicht 3 angrenzend ist in dem Stapel 1 eine sogenannte Informationssubstratschicht 5 angeordnet. Diese weist an einer Oberseite 8 einen Sicherheitsdruck 6 auf. Typischerweise umfasst ein Sicherheitsdruck 6 beispielsweise ein Guillochenmuster oder Ähnliches. Der Sicherheitsdruck 6 kann vollfarbig ausgeführt sein.

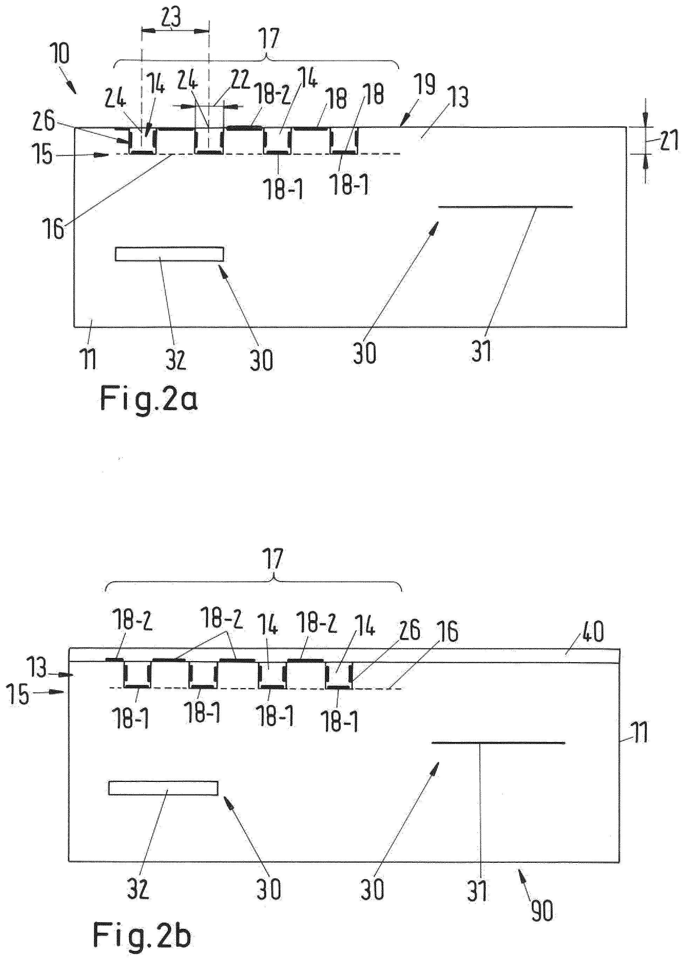

Beim Zusammenfügen der Substratschichten 2 des Stapels 1 werden diese zu einem Laminationskörper 11 zusammengefügt, welcher einen Dokumentenrohling 10 bildet. Ein solcher ist schematisch in Fig. 2a dargestellt. Perforationsöffnungen 14 sind hierbei zu einer Oberfläche 19 eines Dokumentkörpers 11 offen. Diese durchdringen eine äußere Materialschicht 13, deren Schichtstärke 21 der Substratschichtstärke 27 der äußeren Substratschicht 3 (vgl. Fig. 1) in etwa entspricht. Der Öffnungsdurchmesser kann durch die Laminierung so verändert werden, dass die Größe der Öffnungen 14 im Kartenkörper nicht genau der der Perforationsöffnungen 4 in der ursprünglichen Substratschicht entspricht. Auch die Öffnungsform kann sich während des Laminierens verändern. Die Perforationsöffnungen 14 durchdringen die äußere Materialschicht 13, die aus der äußeren Substratschicht 3 entstanden ist, vollständig bis zu einer Informationsschicht 15, auf der der Sicherheitsdruck 16 ausgebildet ist. Der Sicherheitsdruck wird dadurch nicht verändert bzw. beschädigt. Die Informationsschicht 15 ist aus der Informationssubstratschicht 5 entstanden. Der Sicherheitsdruck 16 ist als gestrichelte Linie dargestellt. Es wird an dieser Stelle angemerkt, dass die einzelnen Substratschichten 2 (vgl. Fig. 1) zu einem monolithischen Laminationskörper 11 zusammengefügt sind, in dem hinsichtlich der Kunststoffstruktur keine Phasenübergänge an jenen Stellen erkennbar sind, an denen ursprünglich Substratschichtgrenzen der Substratschichten 2 in dem Stapel 1 vorhanden waren. Es sind alternative Ausführungsformen möglich, bei denen der Laminationskörper nicht monolithisch ausgebildet ist. Bei diesen Ausführungsformen kann der Laminationskörper aus Substratschichten hergestellt sein, die auf Basis unterschiedlicher Kunststoffmaterialien hergestellt sind.

In einem Individualisierungsbereich 17 wird auf eine Außenfläche 19 des Laminationskörpers 11 eine Individualisierungsinformation 18 aufgedruckt. Dies erfolgt vorzugsweise mittels eines Digitaldruckverfahrens, insbesondere eines Tintenstrahldruckverfahrens. Einzelne Bildpunkte werden mit unterschiedlichen Zubereitungen auf die Außenfläche 19 des Laminationskörpers 11 gedruckt. Ein Teil der Individualisierungsinformation 18-1 wird hierbei auf die Informationsschicht 15 durch die Perforationsöffnungen 14 hindurchgedruckt. Dies bedeutet, dass die verwendete Zubereitung in die Mikroperforationsöffnungen 14 eindringt und beispielsweise mittels eines Kapillareffekts zu der Informationsschicht 15 hingeleitet wird. Dort verbindet sich somit ein Teil 18-1 der Individualisierungsinformation 18 mit dem Sicherheitsdruck 16. Ein weiterer Teil 18-2 der Individualisierungsinformation verbleibt auf der Außenfläche 19 quasi auf den Stegen zwischen den Mikroperforationsöffnungen 14. Die Individualisierungsinformation 18 wird somit in zwei unterschiedlichen Ebenen des Laminationskörpers 11 gespeichert.

Bei einer Ausführungsform wird der eine Teil 18-1 der Individualisierungsinformation pixelgenau in die Mikroperforationsöffnungen 14 gedruckt. Bei einer Ausführungsform kann vorgesehen sein, dass nur der eine Teil 18-1, welcher pixelgenau in die Mikroperforationsöffnungen 14 gedruckt wird, als Individualisierungsinformation 18 verwendet wird. Hierbei existieren somit keine Informationsanteile, die auf der Außenfläche 19, d.h. den Stegen zwischen den Mikroperforationen 14 verbleibt.

Die verwendeten Zubereitungen können vorzugsweise so ausgestaltet sein, dass der sich ergebende Farbeindruck der gesamten Individualisierungsinformation 18 vollfarbig ist. Die Zubereitungen umfassen somit vorzugsweise mindestens drei Zubereitungen, die im verdruckten Zustand jeweils einen Farbeindruck einer Primärfarbe eines Farbsystems bei einem menschlichen Betrachter hervorrufen. Darüber hinaus sind die Zubereitungen vorzugsweise so ausgebildet, dass die ausgebildeten Bildpunkte, insbesondere im Bereich der Mikroperforationsöffnungen 14 transluzent sind, so dass ein Teil des Sicherheitsdrucks 16 auch im Bereich der Mikroperforationsöffnungen 14 durch den Teil der Individualisierungsinformation 18-1 erkennbar bleibt, der auf die Informationsschicht 15 gedruckt ist. Hierdurch wird eine optimale Verbindung der Individualisierungsinformation 18 mit dem Sicherheitsdruck 16 erreicht.

Insbesondere ist es vorteilhaft, wenn die äußere Materialschicht 13 transparent und farbneutral ausgebildet ist, so dass der Sicherheitsdruck durch die Außenfläche 19 betrachtbar ist. Dieses gilt zumindest für die Bereiche, die nicht opak bedruckt sind.

Vorzugsweise werden Zubereitungen verwendet, die einen Lösungsmittelanteil enthalten, der den Kunststoff der äußeren Materialschicht 13 und/oder der Informationsschicht 15 anlöst. Hierdurch wird eine Diffusion von Farbmitteln der Zubereitung in das Material der äußeren Materialschicht 13, eventuell einschließlich der Wände 26 der Perforationsöffnungen 14, und der Informationsschicht 15 unterstützt und/oder herbeigeführt.

Um eine gute Verbindung der Individualisierungsinformation 18, insbesondere mit dem Sicherheitsdruck 16, zu erreichen, sind die Zubereitungen vorzugsweise auf Basis des Kunststoffmaterials hergestellt, aus dem die äußere Materialschicht 13 und/oder die Informationsschicht 15 hergestellt wird.

In Fig. 2a ist gut zu erkennen, dass weitere Sicherheitselemente 30, beispielsweise ein Hologramm 31 und ein Mikrochip 32, in den Laminationskörper 11 integriert werden können. Diese sind lediglich als beispielhafte Sicherheitselemente 30 aufgeführt.

Um die aufgebrachte Individualisierungsinformation 18, insbesondere den weiteren Teil 18-2, der auf der Außenfläche 19 des Laminationskörpers 11 gespeichert ist, vor mechanischer Beschädigung und/oder einer Manipulation zu schützen, wird auf die Außenfläche 19 eine Lackschicht 40 aufgebracht, welche so aufgebracht werden kann, dass die Perforationsöffnungen 14 mit dem Lack verfüllt werden. Hierdurch ergibt sich eine glatte Oberfläche des fertigen Dokumentenkörper 80. In der dargestellten Ausführungsform ist der Dokumentenkörper 80 selbst das Sicherheitsdokument 90. Bei anderen Ausführungsformen kann der Dokumentenkörper 80 in ein Passbuch eingenäht sein, welches das fertige Sicherheitsdokument darstellt.

In Fig. 3 ist eine schematische Draufsicht auf ein als Karte ausgebildetes Sicherheitsdokument 90 dargestellt. Zu erkennen ist, dass in einem Individualisierungsbereich 17 ein Gesichtsbild ausgebildet ist, welches vorzugsweise vollfarbig ausgebildet ist. Schematisch angedeutet ist ein Raster von Perforationsöffnungen 14. Ein Teil der Individualisierungsinformationen 18 in Form des Gesichtsbildes ist somit durch die Perforationsöffnungen 14 auf eine Informationsschicht gedruckt, auf der ein Sicherheitsdruck 16 aufgebracht ist. Die Perforationsöffnungen müssen nicht über den gesamten Bereich existieren, auf den Individualisierungsinformationen aufgebracht werden. Vorzugsweise erstrecken sich die Perforationsöffnungen jedoch über den gesamten Bereich, auf den Individualisierungsinformationen gedruckt werden, um sämtliche Individualisierungsinformationen adäquat über die Speicherung eines Informationsanteils auf der Informationsschicht abzusichern.

In Fig. 4 ist eine weitere Substratschicht gezeigt, in die Perforationsöffnungen eingebracht sind, welche sich von einer Außenfläche 19 ausgehend konisch aufweiten. Ein Durchmesser 22 an der Außenfläche 19 ist somit geringer als ein Durchmesser 25 der Perforationsöffnungen 14, der im fertigen Laminationskörper 11 an die Informationsschicht 15 angrenzen wird.

Andere Ausführungsformen können anders ausgestaltet sein, z.B. zylindrische Perforationsöffnungen aufweisen.

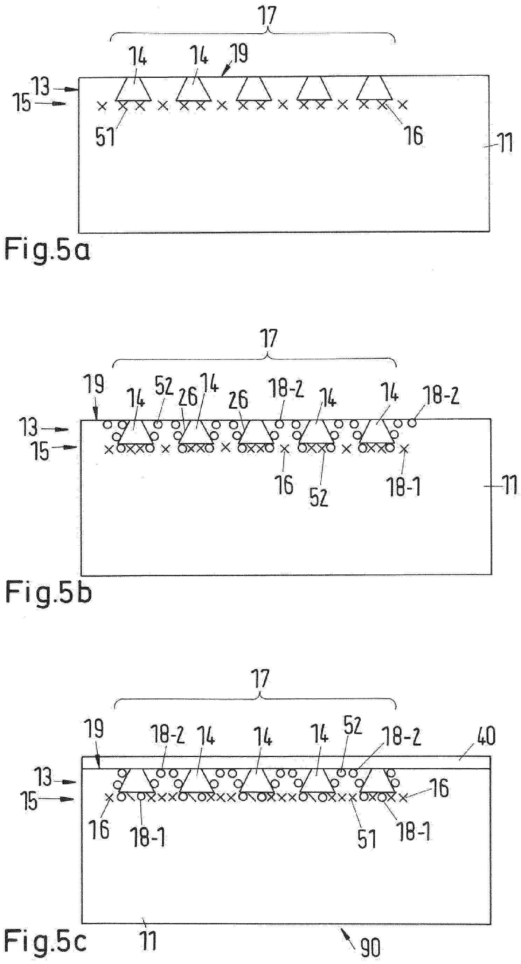

In Fig. 5a ist schematisch ein Laminationskörper dargestellt, bei dem die Perforationsöffnungen sich von der Außenfläche 19 zu der Informationsschicht hin konusförmig erweitern. Auf der Informationsschicht 15 ist ein Sicherheitsdruck 16 aufgebracht, welches mittels Kreuzen 51 angedeutet ist. Die einzeln über die Kreuze 51 angedeuteten Farbmittel sind in die Informationsschicht 15 eindiffundiert. In Fig. 5b ist der Laminationskörper nach dem Aufdrucken der Individualisierungsinformation 18 dargestellt. Die Farbmittel der Individualisierungsinformation 18 sind über Kreise 52 angedeutet. Zu erkennen ist, dass auch diese an der Außenfläche 19 in die oberste Materialschicht 13 sowie der Informationsanteil 18-1, der auf die Informationsschicht 15 gedruckt ist, in diese eindiffundiert ist. Hierdurch erfolgt eine optimale Verbindung der Individualisierungsinformation mit dem Sicherheitsdruck. Darüber hinaus besteht eine Korrelation zwischen einzelnen Bildpunkten, die durch die Perforationsöffnungen 14 auf die Informationsschicht 15 gedruckt sind, und jenen Bildpunkten, welche auf der Außenfläche 19 der obersten Materialschicht 13 ausgebildet werden. In Fig. 5c ist dann ein fertiges Sicherheitsdokument 90 dargestellt, bei dem erneut auf die Außenfläche 19 des Laminationskörpers 11 des Dokumentenrohlings 10 eine Lackschicht 40 aufgebracht ist. Diese kann so aufgebracht werden, dass die Perforationsöffnungen gar nicht oder nahezu gar nicht oder ganz oder nur teilweise verfüllt werden. In jedem Fall wird eine glatte Oberfläche der Lackschicht angestrebt. Alternativ kann eine äußere Schutzschicht aufgebracht werden.

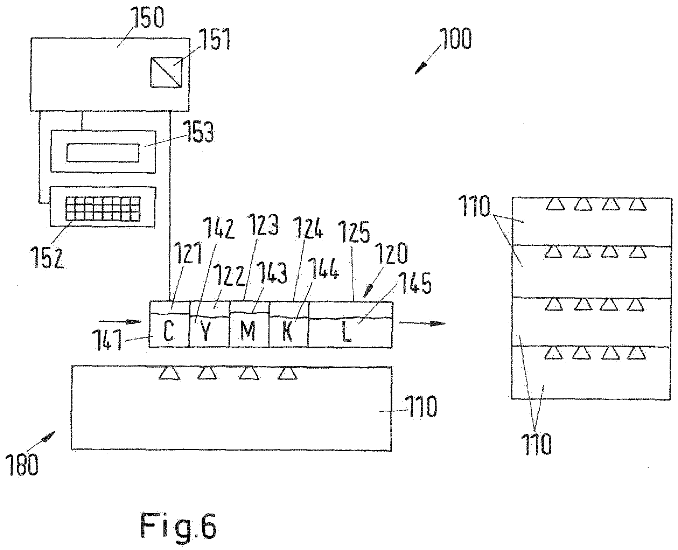

In Fig. 6 ist schematisch ein System zur Individualisierung von Sicherheitsdokumenten dargestellt. Das System 100 umfasst eine Mehrzahl von Dokumentrohlingen 110. Einer dieser Dokumentrohlinge 110 befindet sich in einer digitalen Druckeinrichtung 120, welche als Tintenstrahldruckeinrichtung 120 ausgebildet ist. Diese umfasst eine Mehrzahl von Reservoirs 121-125, von denen einigen Zubereitungen 141-144 aufweisen, welche jeweils einen unterschiedlichen optischen Eindruck im verdruckten Zustand bei einem Betrachter hervorrufen. Die Zubereitungen 121-123 stellen beispielsweise Zubereitungen dar, welche im verdruckten Zustand die Primärfarben Cyan, Gelb und Magenta darstellen. Eine Zubereitung 144 ist vorgesehen, um einen schwarzen Eindruck bei einem Betrachter im verdruckten Zustand hervorzurufen. Ein letztes Reservoir 125 ist mit einem transparenten farbneutralen Lack 145 gefüllt. Über eine Steuereinrichtung 150 wird die Druckeinrichtung 120 gesteuert. Die Steuereinrichtung 150 umfasst eine Schnittstelle 151 zum Empfangen der Individualisierungsinformationen, beispielsweise in Form eines Datensatzes. Alternativ können die Individualisierungsinformationen über eine Eingabevorrichtung 152, welche beispielsweise als Tastatur ausgebildet ist, eingegeben werden. Für eine Kontrolle der Individualisierungsinformationen ist beispielsweise eine Anzeigevorrichtung 153 vorgesehen. Die Steuereinrichtung 150 steuert die als Tintenstrahldruckeinrichtung ausgebildete digitale Druckeinrichtung 120, um gezielt die Individualisierungsinformationen auf die Außenfläche 19 des in der Tintenstrahldruckeinrichtung befindlichen Dokumentenrohlings 110 aufzubringen. Hierbei wird ein Teil der Individualisierungsinformationen so aufgebracht, dass die Zubereitungen 141-144 durch die Mikroperforationen 14 auf eine Informationsschicht 15 gedruckt werden, welche bereits mit einem Sicherheitsdruck 16 versehen ist. Nach dem Aufbringen der Individualisierungsinformationen wird bei dieser Ausführungsform ebenfalls mittels der Tintenstrahldruckvorrichtung der Lack 40 auf die Außenfläche 19 des Dokumentenrohlings 110 aufgebracht, so dass ein fertiges Sicherheitsdokument 180 geschaffen wird.

Es versteht sich für den Fachmann, dass lediglich beispielhafte Ausführungsformen beschrieben sind.

### Bezugszeichenliste

- 1: Stapel
- 2: Substratschichten
- 3: äußere Substratschicht
- 4: Perforationsöffnungen
- 5: Informationsschicht
- 6: Sicherheitsdruck
- 7: Individualisierungsbereich
- 8: Oberseite der Informationsschicht
- 10: Dokumentenrohling
- 11: Laminationskörper
- 13: äußere Materialschicht
- 14: Perforationsöffnungen
- 15: Informationsschicht
- 16: Sicherheitsdruck
- 17: Individualisierungsbereich
- 18: Individualisierungsinformation
- 18-1: Teil der Individualisierungsinformation
- 18-2: weiterer Teil der Individualisierungsinformation
- 19: äußere Fläche
- 21: Schichtstärke
- 22: Durchmesser
- 23: Abstand
- 24: Mittelpunkte
- 25: Durchmesser (an der Informationsschicht)
- 26: Wände
- 27: Substratschichtstärke
- 30: Sicherheitselemente
- 31: Hologramm
- 32: Mikrochip
- 40: Lackschicht
- 51: Farbmittel Sicherheitsdruck (Kreuz)
- 52: Farbmittel Individualisierungsinformation (Kreis)
- 80: Dokumentenkörper
- 90: Sicherheitsdokument
- 100: System
- 110: Dokumentrohling
- 120: Tintenstrahldruckeinrichtung
- 121-125: Reservoirs
- 141-144: Zubereitungen
- 145: Lack
- 150: Steuereinrichtung
- 151: Schnittstelle
- 152: Eingabevorrichtung
- 153: Anzeigevorrichtung
- 180: Sicherheitsdokument

## Patentansprüche

1. Verfahren zum Individualisieren eines Sicherheitsdokuments (90, 180) umfassend die Schritte:
Bereitstellen eines Dokumentenrohlings (10; 110), wobei der Dokumentenrohling (10; 110) einen Laminationskörper (11) umfasst;
Bereitstellen einer digitalen Druckeinrichtung (120);
Bedrucken mindestens einer Außenfläche (19) des Laminationskörpers (11) mittels der digitalen Druckeinrichtung (120) zum Einbringen von Individualisierungsinformationen (18) in den Laminationskörper (11);
wobei
der Dokumentenrohling (10; 110) mit einem Laminationskörper (11) bereitgestellt wird, der zumindest in einem Individualisierungsbereich (17) in einer an die mindestens eine Außenfläche (19) angrenzenden äußeren Materialschicht (13) eine Vielzahl die äußere Materialschicht (13) bis zu einer Informationsschicht (15) durchdringende Perforationsöffnungen (14) aufweist, wobei die Informationsschicht zumindest in dem Individualisierungsbereich eine grafisch erfassbare Information und einen Sicherheitsdruck umfasst,
**dadurch gekennzeichnet, dass**
die Individualisierungsinformationen (18) so auf die Außenfläche (19) aufgedruckt werden, dass zumindest ein Teil (18-1) der Individualisierungsinformationen (18) durch die Perforationsöffnungen (14) hindurch auf die Informationsschicht (15) gedruckt wird und die grafisch erfassbare Information und der Sicherheitsdruck der Informationsschicht modifiziert wird, sodass sich der Teil (18-1) der Individualisierungsinformation (18) mit dem Sicherheitsdruck verbindet und ein Entfernen von Anteilen der auf die Informationsschicht aufgedruckten Individualisierungsinformationen zu einer Veränderung und/oder Beschädigung des auf die Informationsschicht aufgedruckten Sicherheitsdrucks führt, wobei die Individualisierungsinformationen (18) mittels einer Zubereitung gedruckt werden, welche im verdruckten Zustand transluzent oder transparent ist, sodass Teile des Sicherheitsdrucks trotz einer Überdruckung durch die Individualisierungsinformationen hindurch weiterhin wahrnehmbar sind.

2. Verfahren nach Anspruch 1, **dadurch gekennzeichnet, dass** die Perforationsöffnungen (14) als Mikroperforationen mit einem Durchmesser (22) an der Außenfläche (19) im Bereich von 20 µm bis 200 µm, bevorzugt im Beriech von 30 µm bis 70 µm und am bevorzugtesten im Bereich von 50 µm +/- 10 µm ausgebildet sind.

3. Verfahren nach einem der Ansprüche 1 oder 2, **dadurch gekennzeichnet, dass** die Mittelpunkte (24) der Perforationsöffnungen (14) einen Abstand (23) zueinander aufweisen, der im Bereich von dem 1,2-fachen bis zu dem 3-fachen des Durchmessers (22) der Perforationsöffnung an der Außenfläche (19), bevorzugt in dem Bereich von dem 1,3-fachen bis zum bis 1,5-fachen des Durchmesser (22) liegt.

4. Verfahren nach einem der Ansprüche 1 bis 3, **dadurch gekennzeichnet, dass** der Laminationskörper (11) mit Perforationsöffnungen (14) bereitgestellt wird, die sich konisch von der Außenseite (19) zu der Informationsschicht (15) hin aufweiten.

5. Verfahren nach einem der Ansprüche 1 bis 4, **dadurch gekennzeichnet, dass** die Individualisierungsinformationen (18) mittels mindestens einer Zubereitung (141-144) gedruckt werden, welche ein Lösungsmittel umfasst, welches das Material der äußeren Materialschicht (13) und/oder der Informationsschicht (15) angreift, so dass ein Eindiffundieren von Farbmitteln (52) der mindestens einen Zubereitung (141-144) in die äußere Materialschicht (13), in Wände (26) der Perforationsöffnungen (14) der äußeren Materialschicht (13) und/oder in die Informationsschicht (15) begünstigt wird.

6. Verfahren nach einem der Ansprüche 1 bis 5, **dadurch gekennzeichnet, dass** die Individualisierungsinformationen (18) mittels mehrerer Zubereitungen, vorzugsweise vollfarbig, gedruckt werden, so dass die Individualisierungsinformationen (18) teilweise auf der Außenfläche (19) und teilweise auf der Informationsschicht (15) ausgebildet werden.

7. Verfahren nach einem der Ansprüche 1 bis 6, **dadurch gekennzeichnet, dass** zumindest ein Anteil (18-1) der Individualisierungsinformationen (18) pixelgenau mittels der mindestens einen Zubereitung (141-144) in Perforationsöffnungen (14) gedruckt wird.

8. System (100) zur Individualisierung von Dokumenten umfassend:
einen oder mehrere Dokumentrohlinge (110) mit einem Laminationskörper (11);
eine digitale Druckeinrichtung (120);
**dadurch gekennzeichnet, dass**
der Laminationskörper (11) eine an eine Außenseite (19) angrenzende Materialschicht (13) mit Perforationsöffnungen (14) aufweist, die diese an die Außenfläche (19) angrenzende äußere Materialschicht (13) bis zu einer Informationsschicht (15) durchdringen, wobei die Informationsschicht zumindest in dem Individualisierungsbereich eine grafisch erfassbare Information und einen Sicherheitsdruck umfasst,
und die Druckeinrichtung (120) so ausgebildet ist, dass zumindest ein Teil (18-1) der Individualisierungsinformationen (18) durch die Perforationsöffnungen (14) hindurch auf die Informationsschicht (15) gedruckt worden ist und die grafisch erfassbare Information und der Sicherheitsdruck der Informationsschicht modifiziert worden ist, sodass sich der Teil (18-1) der Individualisierungsinformationen (18) mit dem Sicherheitsdruck verbindet und ein Entfernen von Anteilen der auf die Informationsschicht aufgedruckten Individualisierungsinformationen zu einer Veränderung und/oder Beschädigung des auf die Informationsschicht aufgedruckten Sicherheitsdrucks führt, wobei die Individualisierungsinformationen (18) mittels einer Zubereitung gedruckt worden sind, welche im verdruckten Zustand transluzent oder transparent ist, sodass Teile des Sicherheitsdrucks trotz einer Überdruckung durch die Individualisierungsinformationen hindurch weiter wahrnehmbar sind.

9. System (100) nach Anspruch 8, **dadurch gekennzeichnet, dass** die Druckeinrichtung (120) eine Tintenstrahldruckvorrichtung umfasst.

## Claims

1. Method for individualising a security document (90, 180) comprising the steps:
providing a document blank (10; 110), wherein the document blank (10; 110) comprises a lamination body (11);
providing a digital printing device (120);
printing on at least one outer surface (19) of the lamination body (11) by means of the digital printing device (120) in order to introduce individualisation information (18) into the lamination body (11);
wherein
the document blank (10; 110) is provided with a lamination body (11) which, at least in an individualisation region (17) in an outer material layer (13) adjacent to the at least one outer surface (19), has a plurality of perforation openings (14) that penetrate the outer material layer (13) to an information layer (15), with the information layer comprising, at least in the individualisation region, graphically determinable information and a security imprint, **characterised in that**
the individualisation information (18) is printed onto the outer surface (19) in such a way that at least a part (18-1) of the individualisation information (18) is printed onto the information layer (15) through the perforation openings (14) and the graphically determinable information and the security imprint of the information layer is modified so that the part (18-1) of the individualisation information (18) unites with the security imprint and a removing of portions of the individualisation information printed onto the information layer leads to a changing and/or damaging of the security imprint printed onto the information layer, with the individualisation information (18) being printed by way of a preparation which when in the printed state is translucent or transparent, so that parts of the security imprint can still be perceived despite an overprinting through the individualisation information.

2. The method of claim 1 **characterised in that** the perforation openings (14) are configured as micro perforations having a diameter (22) on the outer surface (19) that ranges from 20 µm to 200 µm, preferably from 30 µm to 70 µm and most preferably being 50 µm +/-10 µm.

3. The method of either of claims 1 or 2 **characterised in that** the centres (24) of the perforation openings (14) have a distance (23) from one another which lies in a range of 1.2 to 3 times the diameter (22) of the perforation opening at the outer surface (19), preferably in a range of 1.3 to 1.5 times the diameter (22).

4. The method of any one of claims 1 to 3 **characterised in that** the lamination body (11) is provided with perforation openings (14) which widen conically from the outer side (19) towards the information layer (15).

5. The method of any one of claims 1 to 4 **characterised in that** individualisation information (18) is printed by way of at least one preparation (141-144) which comprises a solvent that attacks the material of the outer material layer (13) and/or of the information layer (15) such that a diffusing of colorants (52) of the at least one preparation (141-144) into the outer material layer (13), into walls (26) of the perforation openings (14) of the outer material layer (13) and/or into the information layer (15) is promoted.

6. The method of any one of claims 1 to 5 **characterised in that** the individualisation information (18) is printed by way of a plurality of preparations, preferably full-colour, such that the individualisation information (18) is configured partly on the outer surface (19) and partly on the information layer (15).

7. The method of any one of claims 1 to 6 **characterised in that** at least a part (18-1) of the individualisation information (18) is printed with pixel accuracy by way of the at least one preparation (141-144) in perforation openings (14).

8. System (100) for individualising documents comprising:
one or more document blanks (110) having a lamination body (11);
a digital printing device (120);
**characterised in that**
the lamination body (11) comprises a material layer (13) adjacent to an outer side (19), said material layer having perforation openings (14) which penetrate this outer material layer (13) adjacent to the outer surface (19) to an information layer (15), with the information layer comprising, at least in the individualisation region, graphically determinable information and a security imprint, and the printing device (120) is designed in such a way that at least a part (18-1) of the individualisation information (18) has been printed through the perforation openings (14) onto the information layer (15) and the graphically determinable Information and the security imprint of the information layer is modified such that the part (18-1) of the individualisation information (18) unites with the security imprint and a removing of portions of the individualisation information printed onto the information layer leads to a changing and/or damaging of the security imprint printed onto the information layer, with the individualisation information (18) having been printed by way of a preparation which in the printed state is translucent or transparent so that parts of the security imprint can still be perceived despite an overprinting through the individualisation information.

9. The system (100) of claim 8 **characterised in that** the printing device (120) comprises an inkjet printing apparatus.

## Revendications

1. Procédé servant à individualiser un document de sécurité (90, 180) comprenant les étapes consistant à :
fournir une ébauche de document (10 ; 110), dans lequel l'ébauche de document (10 ; 110) comprend un corps de stratification (11) ;
fournir un dispositif d'impression (120) numérique ;
imprimer au moins une face extérieure (19) du corps de stratification (11) au moyen du dispositif d'impression (120) numérique afin d'introduire des informations d'individualisation (18) dans le corps de stratification (11) ;
dans lequel
l'ébauche de document (10 ; 110) est fournie avec un corps de stratification (11), qui présente au moins dans une zone d'individualisation (17), dans une couche de matériau (13) extérieure jouxtant l'au moins une face extérieure (19), une pluralité d'ouvertures de perforation (14) traversant la couche de matériau (13) extérieure jusqu'à une couche d'information (15), dans lequel la couche d'information comprend, au moins dans la zone d'individualisation, une information pouvant être détectée graphiquement et une impression de sécurité,
**caractérisé en ce que**
les informations d'individualisation (18) sont imprimées sur la face extérieure (19) de telle sorte qu'au moins une partie (18-1) des informations d'individualisation (18) est imprimée à travers les ouvertures de perforation (14) sur la couche d'information (15) et l'information pouvant être détectée graphiquement et l'impression de sécurité de la couche d'information sont modifiées de sorte que la partie (18-1) de l'information d'individualisation (18) se relie à l'impression de sécurité et un retrait de parts des informations d'individualisation imprimées sur la couche d'information donne lieu à une modification et/ou à un endommagement de l'impression de sécurité imprimée sur la couche d'information, dans lequel les informations d'individualisation (18) sont imprimées au moyen d'une préparation, qui est, dans l'état imprimé, translucide ou transparente de sorte que des parties de l'impression de sécurité sont par ailleurs perceptibles en dépit d'une surimpression au travers des informations d'individualisation.

2. Procédé selon la revendication 1, **caractérisé en ce que** les ouvertures de perforation (14) sont réalisées sous la forme de microperforations présentant un diamètre (22) au niveau de la face extérieure (19) situé dans la plage allant de 20 µmm à 200 µm, de manière préférée dans la plage allant de 30 µm à 70 µm et, idéalement dans la plage allant de 50 µm +/- 10 µm.

3. Procédé selon l'une quelconque des revendications 1 ou 2, **caractérisé en ce que** les points centraux (24) des ouvertures de perforation (14) présentant les uns par rapport aux autres une distance (23), qui se trouve dans la plage allant de 1,2 fois à 3 fois le diamètre (22) de l'ouverture de perforation au niveau de la face extérieure (19), de manière préférée dans la plage allant de 1,3 fois à 1,5 fois le diamètre (22).

4. Procédé selon l'une quelconque des revendications 1 à 3, **caractérisé en ce que** le corps de stratification (11) est fourni avec des ouvertures de perforation (14), qui s'élargissent de manière conique depuis le côté extérieur (19) en direction de la couche d'information (15).

5. Procédé selon l'une quelconque des revendications 1 à 4, **caractérisé en ce que** les informations d'individualisation (18) sont imprimées au moyen d'au moins une préparation (141 - 144), qui comprend un solvant, qui attaque le matériau de la couche de matériau (13) extérieure et/ou de la couche d'information (15) de sorte qu'une diffusion de colorants (52) de l'au moins une préparation (141 - 144) dans la couche de matériau (13) extérieure, dans des parois (26) des ouvertures de perforation (14) de la couche de matériau (13) extérieure et/ou dans la couche d'information (15) est favorisée.

6. Procédé selon l'une quelconque des revendications 1 à 5, **caractérisé en ce que** les informations d'individualisation (18) sont imprimées, de préférence de manière multicolore, au moyen de plusieurs préparations, de sorte que les informations d'individualisation (18) sont réalisées en partie sur la face extérieure (19) et en partie sur la couche d'information (15).

7. Procédé selon l'une quelconque des revendications 1 à 6, **caractérisé en ce qu'**au moins une part (18-1) des informations d'individualisation (18) est imprimée au pixel près au moyen de l'au moins une préparation (141 - 144) dans des ouvertures de perforation (14).

8. Système (100) servant à individualiser des documents, comprenant :
une ou plusieurs ébauches de document (110) comprenant un corps de stratification (11) ;
un dispositif d'impression numérique (120) ;
**caractérisé en ce que**
le corps de stratification (11) présente une couche de matériau (13) jouxtant un côté extérieur (19), pourvue d'ouvertures de perforation (14), qui traversent cette dernière au niveau de la couche de matériau (13) extérieure jouxtant la face extérieure (19) jusqu'à une couche d'information (15), dans lequel la couche d'information comprend au moins dans la zone d'individualisation une information pouvant être détectée graphiquement et une impression de sécurité,
et le dispositif d'impression (120) est réalisé de telle sorte qu'au moins une partie (18-1) des informations d'individualisation (18) a été imprimée à travers les ouvertures de perforation (14) sur la couche d'information (15) et l'information pouvant être détectée graphiquement et l'impression de sécurité de la couche d'information ont été modifiées de sorte que la partie (18-1) des informations d'individualisation (18) se relie à l'impression de sécurité et qu'un retrait des parts des informations d'individualisation imprimées sur la couche d'information donne lieu à une modification et/ou à un endommagement de l'impression de sécurité imprimée sur la couche d'information, dans lequel les informations d'individualisation (18) ont été imprimées au moyen d'une préparation, qui est, dans l'état imprimé, translucide ou transparente de sorte que des parties de l'impression de sécurité sont par ailleurs perceptibles en dépit d'une surimpression au travers des informations d'individualisation.

9. Système (100) selon la revendication 8, **caractérisé en ce que** le dispositif d'impression (120) comprend un dispositif d'impression à jet d'encre.
